# EUROPEAN PATENT APPLICATION

(11) **EP 4 633 085 A1**
(43) Date of publication of application: **15.10.2025**
(21) Application number: 24213738.8
(22) Date of filing: 18.11.2024
(51) Int. Cl.: H04L 9/40

(54) **POLICY-BASED TRANSPARENT PACKET INSPECTION FOR LAST MILE ZEROTRUST WORKLOAD PROTECTION**

(30) Priority: 09.04.2024 US 202463631910 P; 30.10.2024 US 202418932151
(71) Applicant: Cisco Technology, Inc., San Jose, CA 95134-1706 (US)
(72) Inventor: RUTA, Francesco, Mesa, AZ, 85207 (US); SOUNTHIRARAJ, David, Leander, TX, 78641 (US)
(74) Representative: Mathys & Squire

(57) **Abstract**

Disclosed are systems, apparatuses, methods, and computer-readable media for policy-based transparent packet inspection for last mile zero-trust workload protection. The method comprises receiving a packet on a network interface of a provisioned resource in a data center or a user device within a network; determining, by a first intercepting agent provisioned within the network interface, whether to inspect the packet based on rules received from a control plane of the network, wherein the network interface comprises a smart network interface card (SmartNIC) or a data processing unit (DPU) and is configured with the first intercepting agent based on the control plane; selectively invoking a deep packet inspection of the packet based on inspection of the packet by the first intercepting agent using the rules from the control plane; and blocking the packet at the network interface based on the deep packet inspection identifying malicious content within the packet.

## Description

### TECHNICAL FIELD

The disclosure relates generally to cloud networking and, more specifically but not exclusively, to systems and techniques for policy-based transparent packet inspection for last mile zero-trust workload protection.

### BACKGROUND

Conventional networks implicitly assumed all malicious actors were denied access and trust was implicitly assumed by devices within the internal network. Perimeter-based security models assume a clear boundary between the trusted internal network and the untrusted external world, which is no longer realistic due to the widespread use of cloud services, mobile devices, and remote work. These developments mean that data and access points are dispersed beyond the traditional network perimeter, making it difficult to enforce security controls effectively. Further, cyber threats have evolved in sophistication and can often bypass perimeter defenses through tactics like phishing, social engineering, and exploiting vulnerabilities within the network. Once inside, these threats can move laterally with little resistance, as internal network segments are typically less fortified.

### BRIEF DESCRIPTION OF THE DRAWINGS

In order to describe the manner in which the above-recited and other advantages and features of the disclosure may be obtained, a more particular description of the principles briefly described above will be rendered by reference to specific embodiments thereof which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:
FIG. 1 illustrates an example of a network using a firewall to protect client devices that consume network functions within the network;
FIG. 2 is a block diagram of a transparent endpoint protection service that protects a client device in accordance with some aspects of the disclosure;
FIG. 3 is a conceptual diagram of a logical space associated with a client device in accordance with some aspects of the disclosure;
FIG. 4A is a conceptual diagram of a client device using a transparent endpoint protection service in accordance with some aspects of the disclosure;
FIG. 4B is a conceptual diagram of a client device using a transparent endpoint protection service for inter-process protection in accordance with some aspects of the disclosure;
FIG. 4C is a conceptual diagram of a client device using a transparent endpoint protection service that performs selective deep packet inspection in accordance with some aspects of the disclosure;
FIG. 4D is a conceptual diagram of a client device using a transparent endpoint protection service that invokes events in accordance with some aspects of the disclosure;
FIG. 5 is a conceptual diagram of a transparent endpoint protection service for encoding metadata between endpoint tunnels in accordance with some aspects of the disclosure;
FIG. 6 is a conceptual diagram of a transparent endpoint protection service for encoding metadata between a client device and a remote access head in accordance with some aspects of the disclosure;
FIG. 7 illustrates an example method for a transparent endpoint protection service in accordance with some aspects of the disclosure; and
FIG. 8 shows an example of a computing system, which may be for example any computing device that may implement components of the system.

### DESCRIPTION

Various embodiments of the disclosure are discussed in detail below. While specific implementations are discussed, it should be understood that this is done for illustration purposes only. A person skilled in the relevant art will recognize that other components and configurations may be used without parting from the spirit and scope of the disclosure. Thus, the following description and drawings are illustrative and are not to be construed as limiting. Numerous specific details are described to provide a thorough understanding of the disclosure. However, in certain instances, well-known or conventional details are not described to avoid obscuring the description. References to one or an embodiment in the present disclosure may be references to the same embodiment or any embodiment; and, such references mean at least one of the embodiments.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any example term. Likewise, the disclosure is not limited to various embodiments given in this specification.

Without intent to limit the scope of the disclosure, examples of instruments, apparatus, methods, and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or may be learned by practice of the herein disclosed principles. The features and advantages of the disclosure may be realized and obtained by means of the instruments and combinations particularly pointed out in the appended claims. These and other features of the disclosure will become more fully apparent from the following description and appended claims, or may be learned by the practice of the principles set forth herein.

### Overview

Aspects of the invention are set out in the independent claims and preferred features are set out in the dependent claims. Features of one aspect may be applied to each aspect alone or in combination with other features.

A zero-trust network in modern cybersecurity technique to address evolving network threats to address the inadequacy of traditional perimeter-based security models. Zero trust assumes that threats can exist both outside and inside the network and requires continuous verification of every user and device attempting to access network resources, minimizing the risk of unauthorized access, data breaches, and data loss. Zero-trust networks cannot completely discard perimeter-based security model techniques because a firewall prevents unauthorized network data from entering to, for example, block unauthorized access, malware, and other cyber threats that can exploit the device as an entry point into the network. The lack of a firewall at a client device can undermine the zero trust principle of continuous verification and strict access control as it allows potential attackers to bypass security policies designed to protect sensitive data and network resources. Further, some attacks can originate within a device to expose data of that device based on process identifiers and ports open within the device itself, which can create additional entry points for a malicious actor.

Systems, apparatuses, processes (also referred to as methods), and computer-readable media (collectively referred to as "systems and techniques") are described herein for a transparent last mile zero-trust workload protection to protect endpoints from within the network using a control plane. In one aspect, an intercepting agent (e.g., also referred to as an interceptor) is transparently configured and injected into a network interface. For example, some network interfaces can include programmable hardware or software functionality to offload various processes, such as cryptography functions.

An example method includes receiving a packet on a network interface of a provisioned resource in a data center or a user device within a network and determining, by a first intercepting agent provisioned within the network interface, whether to inspect the packet based on rules received from a control plane of the network. The network interface comprises a smart network interface card (SmartNIC) or a data processing unit (DPU) and is configured with the first intercepting agent based on the control plane. The method further includes selectively invoking a deep packet inspection of the packet based on inspection of the packet by the first intercepting agent using the rules from the control plane; and blocking the packet at the network interface based on the deep packet inspection identifying malicious content within the packet.

The intercepting agent can be inserted into such network devices (also referred to as network interfaces) based on administrative control and supplemented with policies at runtime, allowing network administrators to increase the security of the endpoint devices without user awareness. In addition, third-party security services can provide information notices which can then be autonomously or semi-autonomously provided to endpoint user devices with minimal delay.

In addition, the systems and techniques can selectively configure an endpoint device for deep packet inspection, providing a multi-layered approach to security at the device, as well as additional functions such as logging, event generation, and other security best practices.

Various aspects of the application will be described with respect to the figures.

### Example Embodiments

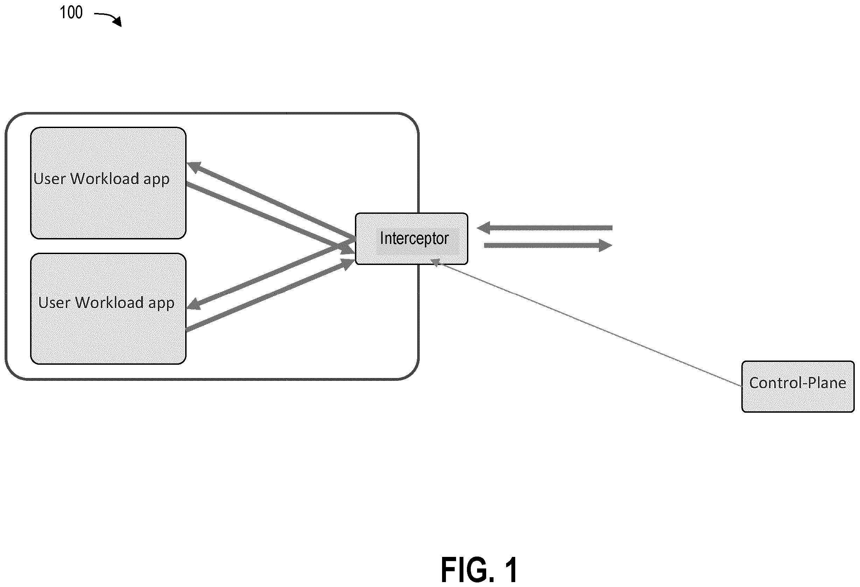

FIG. 1 illustrates an example of a network 100 using a firewall to protect client devices that consume network functions within the network. In a conventional network, such as network 100, endpoint devices 102 that consume network functions (e.g., transmit and receive data) are conventionally trusted and can access and send data. The network devices 104 that provide networking functions and services to the endpoint devices 102 implicitly trust each device within the network based on being able to send and receive data through a firewall 106 at an edge of a private network, which then forwards data into the network 110.

In the event an endpoint device 102 is corrupted, the endpoint device 102 may collect information and attempt to transmit the data to a malicious actor through the firewall 106. The firewall 106 may attempt to block such traffic using data loss prevention (DLP) techniques. The endpoint device 102 may also attack other devices within the network by compromising traffic, identification of exploits, or other types of malicious attacks. DLP at an endpoint device is crucial for safeguarding sensitive information against unauthorized access and leakage. By implementing DLP solutions on endpoint devices, organizations can monitor, detect, and control the movement of confidential data, ensuring it is not exposed or transferred inappropriately. This protection is essential because endpoint devices, such as laptops, smartphones, and tablets, are often vulnerable entry points for cyberattacks and data breaches. Effective DLP measures help in enforcing data security policies, preventing accidental or malicious data exfiltration, and maintaining compliance with regulatory requirements to secure assets and preserve its reputation.

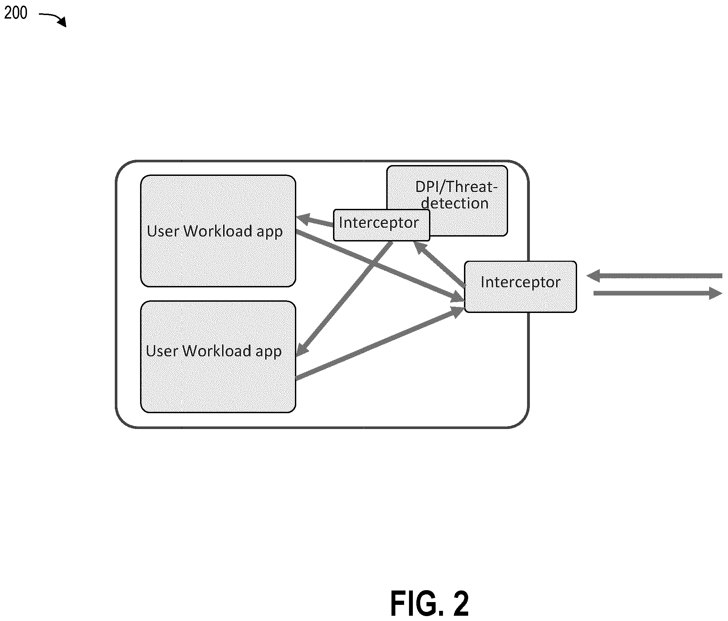

FIG. 2 is a block diagram of a transparent endpoint protection service that protects a device 200 in accordance with some aspects of the disclosure. In some aspects, the device is an endpoint that originates or is a destination of network traffic, such as a client devices (e.g., laptops, phones, etc.) and servers (e.g., container services such as Kubernetes, etc.).

The device 200 includes a processor 202 configured to execute software instructions, a memory 204 configured to store content (e.g., instructions, data, etc.), a network interface 206, and an interface 208 (e.g., a device interface such as a universal serial bus). In some aspects, the network interface 206 can include hardware components for executing an interceptor 210. For example, the network interface 206 may be a smart network interface card (SmartNIC) or a data processing unit (DPU), which are network components designed to enhance performance by offloading and accelerating specific network and data processing tasks. SmartNICs integrate specialized processing capabilities into network cards to handle tasks and network functions (e.g., compression) directly on the network interface to reduce the workload of the processor 202. In some aspects, DPUs are highly programmable processors designed to manage data-centric operations such as packet processing, security, and storage management. SmartNICs and DPUs may include field-programmable gate arrays (FPGAs) or system-on-a-chip (SoC) architectures to enable efficient processing of complex data tasks and improve overall system efficiency and performance.

The interceptor 210 may be transparently injected into the network interface 206 to capture and process all packets from a network 212. In some cases, a control plane 220 (e.g., a control device within an internal network) may inject the interceptor 210 into the network interface 206 in a transparent manner.

The interceptor 210 is configured to perform the required security checks based on the configured policies from the control plane 220. Based on the provided policies, packets could be blocked, forwarded to an inspection engine, and/or logged. For example, the intercepting agent can attach to a socket to transparently intercept messages on that socket. Since the interceptor 210 is executing separately from the processor 202, a user of the device 200 will not experience any processing slowdown or memory consumption caused by separate software-based protection services. The user will also be unaware of any updates, changes, and so forth because a system administrator or another protective service can use the control plane 220 to autonomously deploy policies to the interceptor 210.

The control plane 220 is controlled by an administrator based on dynamic security postures. For example, various third-party services can issue security advisories, and the control plane 220 may issue policies in response to the security advisories. The security advisory can be vendor-specific, such as the identification of a flaw in an operating system or service, but may also be geographic to different types of services or origins of network traffic. Third-party security vendors may provide advisories related to different types of network traffic that are indicative of malicious attacks on specific targets or services based on mass analysis of network data, allowing administrators to dynamically shift security posture based on the third-party security vendor's recommendations. The control plane 220 can supply these policies to the endpoints transparently, providing a higher level of security posture without user intervention.

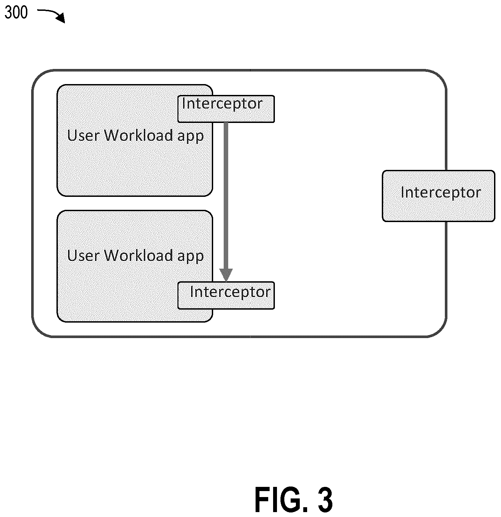

FIG. 3 is a conceptual diagram of a logical space associated with a client device in accordance with some aspects of the disclosure. In particular, FIG. 3 illustrates that a user space 300 and a kernel space 310 are separated by a logical barrier to isolate application and system resources for security purposes and system purposes. Specifically, FIG. 3 illustrates data from the user space 300 and a kernel space 310 are mapped into the physical memory 350. The physical memory can be implemented by any suitable random access memory (RAM) such as static RAM (SRAM) or synchronous dynamic RAM (SDRAM).

A modern operating system can implement a virtual memory (VM) that collects and manages memory from a collection of memory devices (e.g., non-volatile hard disk or other non-RAM storage media to provide additional program memory) to create a virtual memory, a protected memory, and a shared memory. A virtual memory is a collection of all memories, a protected memory provides exclusive access to a region of memory that is allocated to a process, and a shared memory provides cooperative access to a region that is shared by multiple processes.

In the example illustrated in FIG. 3, a plurality of applications 302 that execute within the user space 300 and may call an application programming interface (API) 304 or may use a common language runtime (CLR) (e.g., java, C#, webassembly) to access kernel subsystem 312 in the kernel space. The API 304 of the CLR can implement logic to manage the heap, which is a dynamically sized memory that changes during runtime (e.g., as the application executes).

The kernel subsystem 312 also provides access to hardware devices. For example, the application 302 includes instructions to execute a network request using the API 304, which provides suitable instructions to a device driver 314 to perform the network request using the device 316. For example, the device 316 could be a network interface to execute a hypertext protocol (HTTP) get request for specific data (e.g., a request to retrieve a web page).

In some cases, an application 302 may implement heap management functions and directly interact with the kernel subsystems 312 without the API 304. Although not illustrated, such an application 302 may operate with an API 304 on a selective basis to perform some functions (e.g., interaction with devices 316) but omit other aspects (e.g., heap management).

The kernel subsystem 312 uses the VM 320 to handle management of the physical memory 350 and perform access (e.g., read/write) functions. The VM 320 comprises various components such as a slab allocator, a zone allocator, and a buddy allocator for controlling memory allocation and access.

The kernel space 310 is controlled and only accessible to the kernel because it provides all mechanisms to access the physical memory 350 and storage. The various applications 302 store data within the user space 300. The user space 300 and kernel space 310 are separated to isolate separate concerns and provide a security barrier to prevent applications from intentionally or unintentionally writing in the kernel space 310. The VM 320 is an example of a memory management system that manages the physical memory and separates application content in the user space 300 and system content in the kernel space 310. Another OS may implement a memory management subsystem differently but use similar concepts to provide a layer of system security to prevent applications 302 from being able to access the kernel space 310.

In some instances, the processor and/or the system itself may include additional devices to provide additional layers of security. For example, the processor, which is not illustrated in FIG. 3, may include a secure register that is not available for general use and has security precautions. For example, a processor may include a secure configuration register (SCR) that can be programmed during a boot sequence with a security score. A specific hardware component may be configured to calculate the security score during the boot sequence and store that score in the SCR.

In some aspects, the device 316 can be a SmartNIC or DPU and execute an interceptor 318 to execute policies from a control plane (e.g., the control plane 220 in FIG. 2) based on incoming network traffic. For example, the interceptor 318 may include a pattern match function to match source addresses identified by a third-party security vendor that are indicative of malicious content or traffic. As an example, a user is using a VPN connection into an enterprise over their home router, but that router has been compromised based on a vulnerability, and the interceptor 318 can identify and block this traffic.

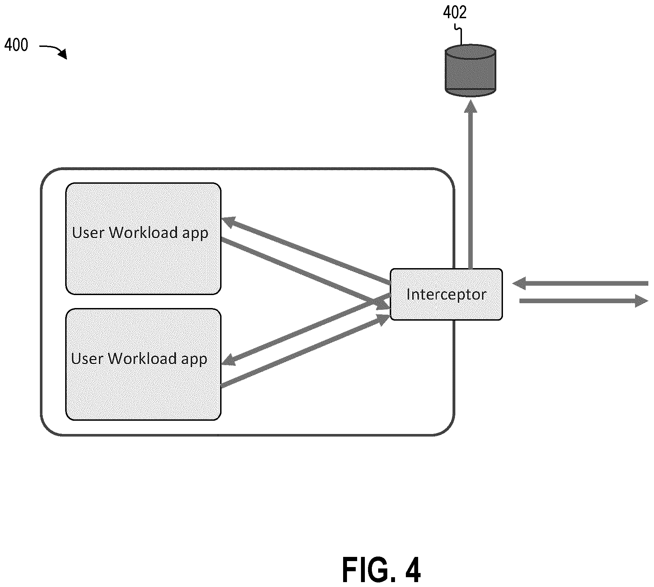

FIG. 4A illustrates an example device 400 for transparent protection of last mile zero-trust workload protection and security enforcement in accordance with some aspects of the disclosure.

The device 400 includes a distributed policy-based transparent packet interceptor 402 for transparent protection of last mile zero-trust workload protection and security enforcement. The interceptor 402 is transparently injected into the interfaces, for example, a network device including a DPUs or SmartNIC, and captures all packets received on the interface (e.g., the network interface 206 in FIG. 2). The interceptor 402 performs the required security checks based on the configured policies. Based on the administrator policies that are promulgated (e.g., via the control plane 220), packets could be blocked, forwarded to an inspection engine, and/or logged. In some aspects, the intercepting agent can be attached to the provisioned resource (e.g., a SmartNIC or DPU within the data center). For example, the intercepting agent can attach to a socket to transparently intercept packets on that socket.

In some aspects, the device 400 provides smart and transparent inspection of network traffic as close to a given workload as possible without burdening a network setup/configuration and/or applications 404 of the device 400. This inspection can be policy-based with fast-path support (once a determination is made that the traffic is safe, inspection process stops and future packets for the same traffic will not be subject to inspection). In addition, packets can be monitored using these agents in real-time and a copy of the packets can be sent to a third entity for further inspection/monitoring without interrupting the network and preventing it from reaching its intended destination. An event may also be generated based on monitored traffic (e.g., DNS attack, etc.).

In one example, the system includes a distributed policy-based transparent packet interceptor for last mile zero-trust workload protection and security enforcement. The interceptor 402 is transparently injected into the interfaces, running within DPUs and SmartNICs (e.g., in a data center), to capture all packets received on the interface and perform the required security checks based on the configured policies.

Based on the network policies, packets could be blocked, forwarded to an inspection engine, and/or logged.

This is different from existing packet inspection solutions as this is transparently injected into the data path. The user (or application) is not aware of the inline inspection of the packets.

FIG. 4B illustrates an example device 420 for transparent protection of last mile zero-trust workload protection and security enforcement in accordance with some aspects of the disclosure.

The device 420 includes an intra-node policy based transparent packet interceptor 402 for last mile zero-trust workload protection and security enforcement. The interceptor 402 could be transparently attached to sockets and low-level networking primitives to perform the required security checks based on the configured policies for traffic between local applications. Based on the network policies, packets may be blocked, forwarded to an inspection engine, and/or logged.

FIG. 4C illustrates an example device 420 for transparent protection of last mile zero-trust workload protection and security enforcement in accordance with some aspects of the disclosure. The device 410 includes an interceptor 402 to inspect local or remote inspection and threat detection with different types of analysis, such as fast-path support. For example, the interceptor 402 can perform a quick pattern match to identify whether a deep packet inspector (DPI) 422 should further inspect the packet. Network traffic can be redirected to the DPI 422 without any changes to the applications 404 of the device 410 and, if no threat was detected, the packet is then forwarded to the applications 404 for regular processing. The interceptor 402 may also transparently intercept all traffic leaving the DPI 422. This allows inspection of packets just before reception by an intended target. Based on network policies, some flows can bypass inspection completely or after the threat detection engine has reached a positive verdict.

FIG. 4D illustrates an example device 430 for transparent protection of last mile zero-trust workload protection and security enforcement in accordance with some aspects of the disclosure.

The device 430 includes an interceptor 402 for transparent policy-based packet duplication for local or remote logging. All flows or selected packets can be duplicated and forwarded to a logger app for lawful intercept, debugging, or threat analysis based on the provided policies (e.g., from the control plane 220). Logging could be automatic for all flows or triggered based on the inspection engine verdict, and may be stored in storage 432 for analysis.

The device 400 may also be configured to transparently generate policy-based traffic related events. Based on the network policies (e.g., from the control plane 220), an event 434 can be generated to report threats, thresholds crossing, events, and other activities. For example, the event can be used in combination with event generation systems (e.g., Kafka). Event generation could be automatic for all flows or triggered based on the inspection engine verdict.

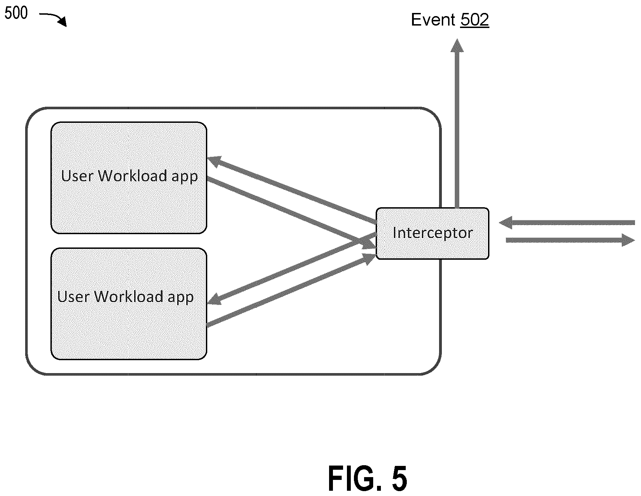

FIG. 5 illustrates an example system 500 for transparent protection of last mile zero-trust workload protection and security enforcement in accordance with some aspects of the disclosure.

The system 500 includes a first device 510 and a second device 520 that each includes a transparent inside-outside secure connectivity framework using an interceptor 512 for protecting last mile connectivity to one or more applications 514. The interceptor 512 is transparently injected into the interfaces of the first device 510 and the second device 520 (e.g., DPUs and SmartNICs) to establish a secure connection between the entry points and the target to ensure trusted connectivity between separated nodes.

The system 500 may also include a transparent security metadata delivery. The interceptor transparently injected into the traffic itself information about the flow (e.g. source IP, user's info, entry point info) to be delivered to the inspection engines independently from where the engine was located. For example, additional information such as authentication tokens and other metadata (e.g. location information such as GPS coordinates) can be used to enforce additional policies such as geofences, tracking, etc.

The security connectivity framework and the security metadata delivery may also be combined, or may be separate implementations (e.g., separate intercepting agents).

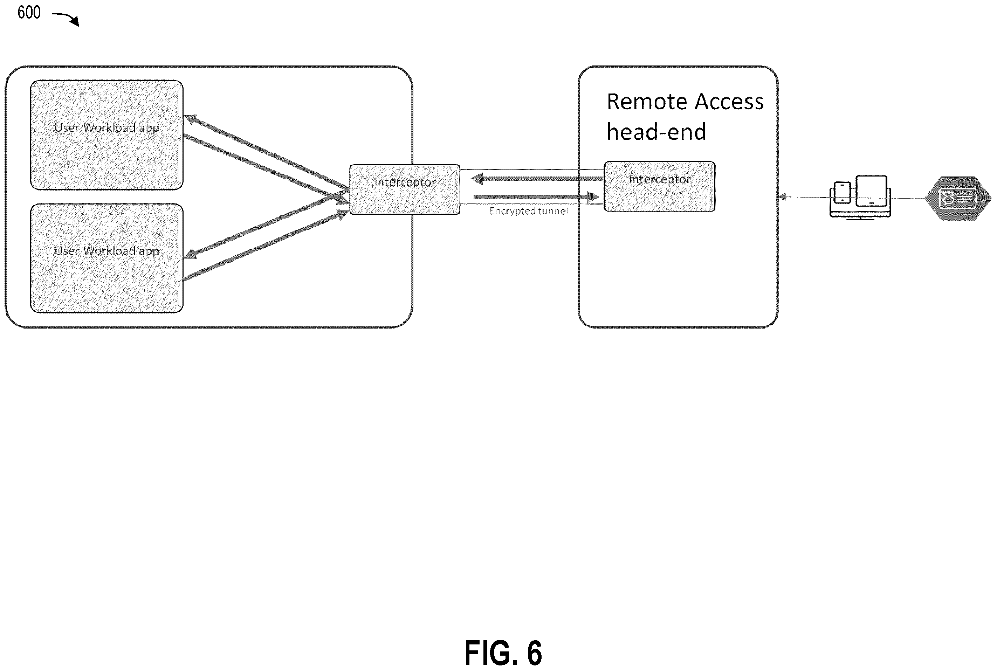

FIG. 6 illustrates an example system 600 for transparent protection of last mile zero-trust workload protection and security enforcement in accordance with some aspects of the disclosure. The system 600 includes a first device 610 that is configured to connect to a head end system 620, which is central server or group of servers that manage and control access to a network of remote devices or terminals. The head end system 620 facilitates the connection between remote users and computing resources, managing data traffic, ensuring security through authentication and encryption, and providing centralized administration and monitoring of the network. For example, the /620 is configured to monitor traffic associated with one or more applications 614.

The first device 610 and the head end system 620 may include an interceptor 612 to inject additional metadata for various purposes, such as geofencing, authentication, and so forth. The additional metadata can be dynamically collected based on the interceptor 612, such as to collect location data when a trigger is satisfied. The additional metadata can provide additional context and improve various services, such as disabling unnecessary authentications. In some cases, the interceptor 612 can also provide an additional layer of security based on various phishing attempts and other malicious activity detected.

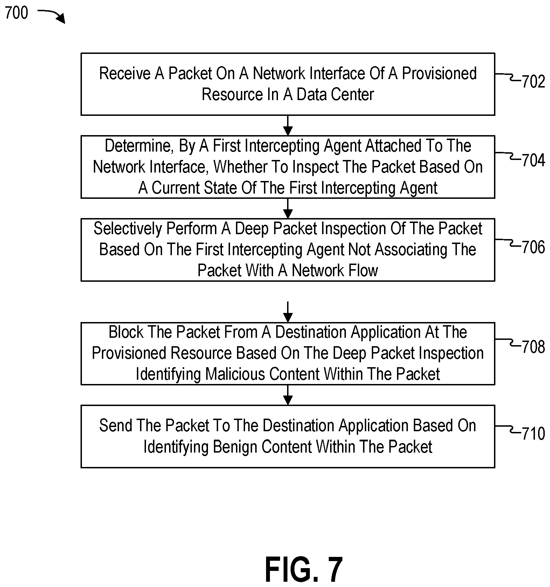

FIG. 7 illustrates an example method for zero-trust IP address resolution in cloud services. Although the example method 700 depicts a particular sequence of operations, the sequence may be altered without departing from the scope of the present disclosure. For example, some of the operations depicted may be performed in parallel or in a different sequence that does not materially affect the function of the method 700. In other examples, different components of an example device or system that implements the method 700 may perform functions at substantially the same time or in a specific sequence. Although a networking device (e.g., using a system-on-chip (SoC) or FPGA, etc.) is described as performing the method, this example is for descriptive purposes.

At block 702, the network device may receive a packet of a provisioned resource in a data center or a user device within a network. The network interface comprises a smart network interface card (SmartNIC) or a data processing unit (DPU). In some aspects, the network interface may be provisioned with a first intercepting agent based on a control plane function (e.g., an administrative control function). The first intercepting agent is transparent to the user and, as described above as well as below, provides zero-trust packet inspection at an endpoint (e.g., a client device, a server) of a network function. An endpoint is a source or a destination of the network and is not an intervening component (e.g., a router). For example, the first intercepting agent is configured to inspect traffic that originates within a network of the endpoint, either from other endpoints or network entities.

At block 704, the network device may determine, by a first intercepting agent provisioned within the network interface, whether to inspect the packet based on rules received from a control plane of the network. In some aspects, the first intercepting agent is executed within the network interface (e.g., via an FPGA, SoC, etc.) and is attached to a socket of the network interface. The first intercepting agent may also be configured via a control plane. In some aspects, an administrator transparently configures the intercepting agent without modification to the destination application or the provisioned application.

At block 706, the network device may selectively invoke a deep packet inspection of the packet based on inspection of the packet by the first intercepting agent using the rules from the control plane. In some cases, the intercepting agent may perform the deep packet inspection. In other aspects, the intercepting agent can forward the packet for processing by a separate device (e.g., a hardware accelerator) or another network entity for handling the inspection.

As part of block 706, the network device may identify a corresponding flow associated with the packet. That is, if the computing system determines the packet is associated with an existing flow, the packet is forwarded without deep packet inspection if it passes an initial inspection within the first intercepting agent. If the packet passes the inspection and is not associated with a known flow, the packet is designated for the deep packet inspection. If the packet passes the deep packet inspection, the computing system (using the intercepting agent)

In some aspects, the network device may also forward a duplicated version of the packet to a data recording system for storing information related to the packet. The duplicated version of the packet can be used for analysis (e.g., for threats, etc.).

In some aspects, the network device may forward a duplicated version of the packet to an event system for triggering downstream effects within a cloud system including the data center.

In another example, the network device may also use the packet to generate events. For example, the network device may, based on the inspection of the packet the first intercepting agent, update a state associated with a policy; and invoke an event based on a condition in the policy is satisfied by the state. For example, the network device can generate an event in an event system to trigger various types of network actions.

At block 708, the network device may block the packet at the network interface based on the deep packet inspection identifying malicious content within the packet.

At block 710, the network device may send the packet to the destination application based on identifying benign content within the packet.

In other aspects, the network device may determine whether a second intercepting agent is associated with a source of the packet and configure an encrypted network connection between the first intercepting agent and the second intercepting agent. In this aspect, the second intercepting agent can inject metadata into packets received by the first intercepting agent. The metadata includes user authentication information, network address information, and application entry point information that is provided at the network interface to enhance the information provided to the receiving device.

In another aspect, the network device can be transparently updated during the runtime of the endpoint. For example, the network device may receive a policy update from the control plane and reinitiate the first intercepting agent based on the policy update. For example, the network device may store the policy update in a non-volatile storage medium and restart the network device with an updated configuration. In the case that the network device reinitializes based on the policy update, the network interface can pause the acceptance of packets while reinitiating the first intercepting agent.

In another aspect, the network device can transparently inspect network traffic on a localhost interface based on attaching the intercepting agent to a socket interface. In this case, when the network device detects that a local packet from a first application on a localhost interface is directed to a second application, the network device can inspect the local packet based on the rules received from the control plane. The network device may also elect to send the local packet to deep packet inspection, log the data as described above, and so forth. In this case, the intercepting agent can perform an internal traffic inspection to prevent malicious activity within the device itself.

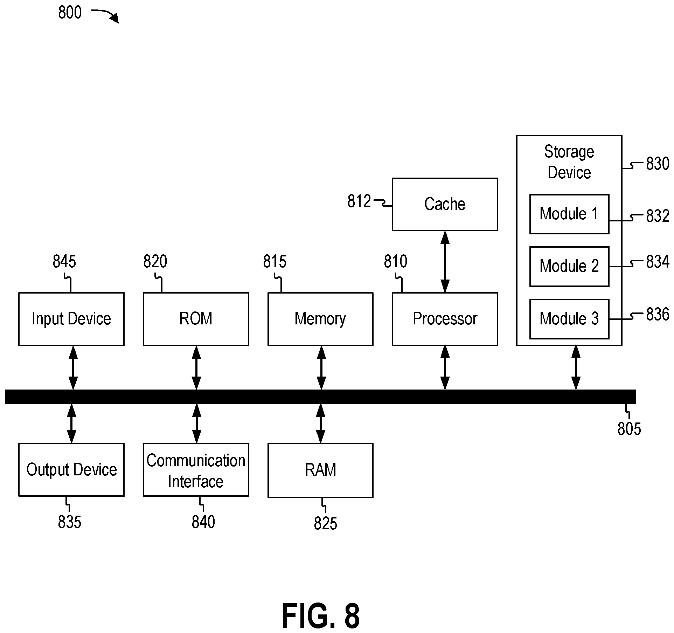

FIG. 8 is a diagram illustrating an example of a system for implementing certain aspects of the present technology. In particular, FIG. 8 illustrates an example of computing system 800, which can be for example any computing device making up an internal computing system, a remote computing system, a camera, or any component thereof in which the components of the system are in communication with each other using connection 805. Connection 805 can be a physical connection using a bus, or a direct connection to processor 810, such as in a chipset architecture. Connection 805 can also be a virtual connection, networked connection, or logical connection.

In some aspects, computing system 800 is a distributed system in which the functions described in this disclosure can be distributed within a datacenter, multiple data centers, a peer network, etc. In some aspects, one or more of the described system components represents many such components each performing some or all of the function for which the component is described. In some aspects, the components can be physical or virtual devices.

Example computing system 800 includes at least one processing unit (a central processing unit (CPU) or processor) 810 and connection 805 that couples various system components including system memory 815, such as ROM 820 and RAM 825 to processor 810. Computing system 800 can include a cache 812 of high-speed memory connected directly with, in close proximity to, or integrated as part of processor 810.

Processor 810 can include any general purpose processor and a hardware service or software service, such as services 832, 834, and 836 stored in storage device 830, configured to control processor 810 as well as a special-purpose processor where software instructions are incorporated into the actual processor design. Processor 810 may essentially be a completely self-contained computing system, containing multiple cores or processors, a bus, memory controller, cache, etc. A multi-core processor may be symmetric or asymmetric.

To enable user interaction, computing system 800 includes an input device 845, which can represent any number of input mechanisms, such as a microphone for speech, a touch-sensitive screen for gesture or graphical input, keyboard, mouse, motion input, speech, etc. Computing system 800 can also include output device 835, which can be one or more of a number of output mechanisms. In some instances, multimodal systems can enable a user to provide multiple types of input/output to communicate with computing system 800. Computing system 800 can include communications interface 840, which can generally govern and manage the user input and system output. The communication interface may perform or facilitate receipt and/or transmission wired or wireless communications using wired and/or wireless transceivers, including those making use of an audio j ack/plug, a microphone j ack/plug, a universal serial bus (USB) port/plug, an Apple^{®} Lightning^{®} port/plug, an Ethernet port/plug, a fiber optic port/plug, a proprietary wired port/plug, a Bluetooth^{®} wireless signal transfer, a BLE wireless signal transfer, an IBEACON^{®} wireless signal transfer, an RFID wireless signal transfer, near-field communications (NFC) wireless signal transfer, dedicated short range communication (DSRC) wireless signal transfer, 802.11 WiFi wireless signal transfer, WLAN signal transfer, Visible Light Communication (VLC), Worldwide Interoperability for Microwave Access (WiMAX), IR communication wireless signal transfer, Public Switched Telephone Network (PSTN) signal transfer, Integrated Services Digital Network (ISDN) signal transfer, 3G/4G/5G/LTE cellular data network wireless signal transfer, ad-hoc network signal transfer, radio wave signal transfer, microwave signal transfer, infrared signal transfer, visible light signal transfer, ultraviolet light signal transfer, wireless signal transfer along the electromagnetic spectrum, or some combination thereof. The communications interface 840 may also include one or more Global Navigation Satellite System (GNSS) receivers or transceivers that are used to determine a location of the computing system 800 based on receipt of one or more signals from one or more satellites associated with one or more GNSS systems. GNSS systems include, but are not limited to, the US-based GPS, the Russia-based Global Navigation Satellite System (GLONASS), the China-based BeiDou Navigation Satellite System (BDS), and the Europe-based Galileo GNSS. There is no restriction on operating on any particular hardware arrangement, and therefore the basic features here may easily be substituted for improved hardware or firmware arrangements as they are developed.

Storage device 830 can be a non-volatile and/or non-transitory and/or computer-readable memory device and can be a hard disk or other types of computer readable media which can store data that are accessible by a computer, such as magnetic cassettes, flash memory cards, solid state memory devices, digital versatile disks, cartridges, a floppy disk, a flexible disk, a hard disk, magnetic tape, a magnetic strip/stripe, any other magnetic storage medium, flash memory, memristor memory, any other solid-state memory, a compact disc read only memory (CD-ROM) optical disc, a rewritable compact disc (CD) optical disc, digital video disk (DVD) optical disc, a blu-ray disc (BDD) optical disc, a holographic optical disk, another optical medium, a secure digital (SD) card, a micro secure digital (microSD) card, a Memory Stick^{®} card, a smartcard chip, a EMV chip, a subscriber identity module (SIM) card, a mini/micro/nano/pico SIM card, another IC chip/card, RAM, static RAM (SRAM), dynamic RAM (DRAM), ROM, programmable read-only memory (PROM), erasable programmable read-only memory (EPROM), electrically erasable programmable read-only memory (EEPROM), flash EPROM (FLASHEPROM), cache memory (L1/L2/L3/L4/L5/L#), resistive random-access memory (RRAM/ReRAM), phase change memory (PCM), spin transfer torque RAM (STT-RAM), another memory chip or cartridge, and/or a combination thereof.

The storage device 830 can include software services, servers, services, etc., that when the code that defines such software is executed by the processor 810, it causes the system to perform a function. In some aspects, a hardware service that performs a particular function can include the software component stored in a computer-readable medium in connection with the necessary hardware components, such as processor 810, connection 805, output device 835, etc., to carry out the function. The term "computer-readable medium" includes, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as CD or DVD, flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

In some examples, the processes described herein (e.g., method 700, and/or other process described herein) may be performed by a computing device or apparatus. In one example, the method 700 can be performed by a computing device having a computing architecture of the computing system 800 shown in FIG. 8.

In summary, disclosed are systems, apparatuses, methods, and computer-readable media for policy-based transparent packet inspection for last mile zero-trust workload protection. The method comprises receiving a packet on a network interface of a provisioned resource in a data center or a user device within a network; determining, by a first intercepting agent provisioned within the network interface, whether to inspect the packet based on rules received from a control plane of the network, wherein the network interface comprises a smart network interface card (SmartNIC) or a data processing unit (DPU) and is configured with the first intercepting agent based on the control plane; selectively invoking a deep packet inspection of the packet based on inspection of the packet by the first intercepting agent using the rules from the control plane; and blocking the packet at the network interface based on the deep packet inspection identifying malicious content within the packet.

In some cases, the computing device or apparatus may include various components, such as one or more input devices, one or more output devices, one or more processors, one or more microprocessors, one or more microcomputers, one or more cameras, one or more sensors, and/or other component(s) that are configured to carry out the steps of processes described herein. In some examples, the computing device may include a display, one or more network interfaces configured to communicate and/or receive the data, any combination thereof, and/or other component(s). The one or more network interfaces can be configured to communicate and/or receive wired and/or wireless data, including data according to the 3G, 4G, 5G, and/or other cellular standard, data according to the Wi-Fi (802.11x) standards, data according to the Bluetooth^{™} standard, data according to the IP standard, and/or other types of data.

The components of the computing device can be implemented in circuitry. For example, the components can include and/or can be implemented using electronic circuits or other electronic hardware, which can include one or more programmable electronic circuits (e.g., microprocessors, graphical processing units (GPUs), digital signal processors (DSPs), CPUs, and/or other suitable electronic circuits), and/or can include and/or be implemented using computer software, firmware, or any combination thereof, to perform the various operations described herein.

In some aspects the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Specific details are provided in the description above to provide a thorough understanding of the aspects and examples provided herein. However, it will be understood by one of ordinary skill in the art that the aspects may be practiced without these specific details. For clarity of explanation, in some instances the present technology may be presented as including individual functional blocks including functional blocks comprising devices, device components, steps or routines in a method embodied in software, or combinations of hardware and software. Additional components may be used other than those shown in the figures and/or described herein. For example, circuits, systems, networks, processes, and other components may be shown as components in block diagram form in order not to obscure the aspects in unnecessary detail. In other instances, well-known circuits, processes, algorithms, structures, and techniques may be shown without unnecessary detail in order to avoid obscuring the aspects.

Individual aspects may be described above as a process or method which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process is terminated when its operations are completed but may have additional steps not included in a figure. A process may correspond to a method, a function, a procedure, a subroutine, a subprogram, etc. When a process corresponds to a function, its termination can correspond to a return of the function to the calling function or the main function.

Processes and methods according to the above-described examples can be implemented using computer-executable instructions that are stored or otherwise available from computer-readable media. Such instructions can include, for example, instructions and data which cause or otherwise configure a general purpose computer, special purpose computer, or a processing device to perform a certain function or group of functions. Portions of computer resources used can be accessible over a network. The computer executable instructions may be, for example, binaries, intermediate format instructions such as assembly language, firmware, source code, etc. Examples of computer-readable media that may be used to store instructions, information used, and/or information created during methods according to described examples include magnetic or optical disks, flash memory, USB devices provided with non-volatile memory, networked storage devices, and so on.

Devices implementing processes and methods according to these disclosures can include hardware, software, firmware, middleware, microcode, hardware description languages, or any combination thereof, and can take any of a variety of form factors. When implemented in software, firmware, middleware, or microcode, the program code or code segments to perform the necessary tasks (e.g., a computer-program product) may be stored in a computer-readable or machine-readable medium. A processor(s) may perform the necessary tasks. Typical examples of form factors include laptops, smart phones, mobile phones, tablet devices or other small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are example means for providing the functions described in the disclosure.

In the foregoing description, aspects of the application are described with reference to specific aspects thereof, but those skilled in the art will recognize that the application is not limited thereto. Thus, while illustrative aspects of the application have been described in detail herein, it is to be understood that the inventive concepts may be otherwise variously embodied and employed, and that the appended claims are intended to be construed to include such variations, except as limited by the prior art. Various features and aspects of the above-described application may be used individually or jointly. Further, aspects can be utilized in any number of environments and applications beyond those described herein without departing from the broader spirit and scope of the specification. The specification and drawings are, accordingly, to be regarded as illustrative rather than restrictive. For the purposes of illustration, methods were described in a particular order. It should be appreciated that in alternate aspects, the methods may be performed in a different order than that described.

One of ordinary skill will appreciate that the less than ("<") and greater than (">") symbols or terminology used herein can be replaced with less than or equal to ("≤") and greater than or equal to ("≥") symbols, respectively, without departing from the scope of this description.

Where components are described as being "configured to" perform certain operations, such configuration can be accomplished, for example, by designing electronic circuits or other hardware to perform the operation, by programming programmable electronic circuits (e.g., microprocessors, or other suitable electronic circuits) to perform the operation, or any combination thereof.

The phrase "coupled to" refers to any component that is physically connected to another component either directly or indirectly, and/or any component that is in communication with another component (e.g., connected to the other component over a wired or wireless connection, and/or other suitable communication interface) either directly or indirectly.

Claim language or other language reciting "at least one of" a set and/or "one or more" of a set indicates that one member of the set or multiple members of the set (in any combination) satisfy the claim. For example, claim language reciting "at least one of A and B" or "at least one of A or B" means A, B, or A and B. In another example, claim language reciting "at least one of A, B, and C" or "at least one of A, B, or C" means A, B, C, or A and B, or A and C, or B and C, or A and B and C. The language "at least one of" a set and/or "one or more" of a set does not limit the set to the items listed in the set. For example, claim language reciting "at least one of A and B" or "at least one of A or B" can mean A, B, or A and B, and can additionally include items not listed in the set of A and B.

The various illustrative logical blocks, modules, circuits, and algorithm steps described in connection with the aspects disclosed herein may be implemented as electronic hardware, computer software, firmware, or combinations thereof. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present application.

The techniques described herein may also be implemented in electronic hardware, computer software, firmware, or any combination thereof. Such techniques may be implemented in any of a variety of devices such as general purposes computers, wireless communication device handsets, or integrated circuit devices having multiple uses including application in wireless communication device handsets and other devices. Any features described as modules or components may be implemented together in an integrated logic device or separately as discrete but interoperable logic devices. If implemented in software, the techniques may be realized at least in part by a computer-readable data storage medium comprising program code including instructions that, when executed, performs one or more of the methods described above. The computer-readable data storage medium may form part of a computer program product, which may include packaging materials. The computer-readable medium may comprise memory or data storage media, such as RAM such as synchronous dynamic random access memory (SDRAM), ROM, non-volatile random access memory (NVRAM), EEPROM, flash memory, magnetic or optical data storage media, and the like. The techniques additionally, or alternatively, may be realized at least in part by a computer-readable communication medium that carries or communicates program code in the form of instructions or data structures and that can be accessed, read, and/or executed by a computer, such as propagated signals or waves.

The program code may be executed by a processor, which may include one or more processors, such as one or more DSPs, general purpose microprocessors, an ASIC, FPGAs, or other equivalent integrated or discrete logic circuitry. Such a processor may be configured to perform any of the techniques described in this disclosure. A general purpose processor may be a microprocessor; but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Accordingly, the term "processor," as used herein may refer to any of the foregoing structure, any combination of the foregoing structure, or any other structure or apparatus suitable for implementation of the techniques described herein.

## Claims

1. A method for policy-based transparent packet inspection for last mile zero-trust workload protection, comprising:
receiving a packet on a network interface of a provisioned resource in a data center or a user device within a network;
determining, by a first intercepting agent provisioned within the network interface, whether to inspect the packet based on rules received from a control plane of the network, wherein the network interface comprises a smart network interface card (SmartNIC) or a data processing unit (DPU) and is configured with the first intercepting agent based on the control plane;
selectively invoking a deep packet inspection of the packet based on inspection of the packet by the first intercepting agent using the rules from the control plane; and
blocking the packet at the network interface based on the deep packet inspection identifying malicious content within the packet.

2. The method of claim 1, further comprising:
based on the inspection of the packet by the first intercepting agent, forwarding a duplicated version of the packet to a data recording system for storing the packet.

3. The method of claim 1 or 2, further comprising:
based on the inspection of the packet by the first intercepting agent, updating a state associated with a policy; and
invoking an event based on a condition in the policy being satisfied by the state.

4. The method of any of claims 1 to 3, further comprising:
determining a second intercepting agent is associated with a source of the packet; and
configuring an encrypted network connection between the first intercepting agent and the second intercepting agent.

5. The method of claim 4, wherein the second intercepting agent is configured to inject metadata into packets received at the first intercepting agent.

6. The method of claim 5, wherein the metadata includes at least one of user authentication information, network address information, or application entry point information.

7. The method of any of claims 1 to 6, further comprising:
receiving a policy update from the control plane; and
reinitiating the first intercepting agent based on the policy update.

8. The method of claim 7, wherein the network interface is configured to pause acceptance of packets while reinitiating the first intercepting agent.

9. The method of any of claims 1 to 8, wherein determining whether to inspect the packet comprises:
identifying a corresponding flow associated with the packet, wherein the packet is designated for the deep packet inspection based on the flow not existing.

10. The method of any of claims 1 to 9, further comprising:
receiving a local packet from a first application on a localhost interface directed to a second application; and
inspecting, by the first intercepting agent, the local packet based on the rules received from the control plane.

11. A network device comprising:
means for receiving a packet on a network device within a network;
means for determining, by a first intercepting agent provisioned within the network device, whether to inspect the packet based on rules received from a control plane of the network, wherein the network device comprises a smart network interface card (SmartNIC) or a data processing unit (DPU) and is configured with the first intercepting agent based on the control plane;
means for selectively invoking a deep packet inspection of the packet based on inspection of the packet by the first intercepting agent using the rules from the control plane; and
means for blocking the packet at the network device based on the deep packet inspection identifying malicious content within the packet.

12. The network device of claim 11, further comprising means for implementing the method according to any of claims 2 to 10.

13. A computer program, computer program product or computer readable medium comprising instructions which, when executed by a computer, cause the computer to carry out the steps of the method of any of claims 1 to 10.
